# EUROPEAN PATENT APPLICATION

(11) **EP 4 672 379 A1**
(43) Date of publication of application: **31.12.2025**
(21) Application number: 23945662.7
(22) Date of filing: 15.11.2023
(51) Int. Cl.: H01M 4/62, H01M 4/131, H01M 10/0525, H01M 10/058

(54) **SECONDARY BATTERY AND PREPARATION METHOD THEREFOR, AND ELECTRIC APPARATUS**

(30) Priority: 18.07.2023 CN 202310879812
(71) Applicant: Contemporary Amperex Technology Co., Limited, Ningde, Fujian 352100 (CN)
(72) Inventor: WU, Kai, Ningde, Fujian 352100 (CN); YAN, Guanfusheng, Ningde, Fujian 352100 (CN); JIN, Chao, Ningde, Fujian 352100 (CN); YE, Yonghuang, Ningde, Fujian 352100 (CN); DAI, Zhipeng, Ningde, Fujian 352100 (CN)
(74) Representative: Kraus & Lederer PartGmbB
(86) International application number: PCT/CN2023/131763
(87) International publication number: WO 2025/015782

(57) **Abstract**

A secondary battery and a preparation method therefor, and an electric apparatus. The secondary battery comprises a positive electrode plate, which positive electrode plate comprises a positive electrode current collector and a positive electrode film layer provided on at least one surface of the positive electrode current collector, wherein the positive electrode film layer comprises a positive electrode active material and a material containing a chalcogen element. The secondary battery and an electric apparatus including the secondary battery have improved cycle performance and high-temperature storage performance.

## Description

### CROSS-REFERENCE TO RELATED APPLICATION

The present application claims priority to Chinese Patent Application No. 202310879812.7, filed on July 18, 2023 and entitled "SECONDARY BATTERY AND PREPARATION METHOD THEREFOR, AND ELECTRIC APPARATUS", the content of which is incorporated herein by reference in its entirety.

### TECHNICAL FIELD

The present application belongs to the technical field of batteries, and particularly relates to a secondary battery and a preparation method therefor, and an electric device.

### BACKGROUND

Secondary batteries, also known as rechargeable batteries, can be discharged and charged repeatedly for multiple uses. In recent years, as secondary batteries typified by sodium-ion batteries have been widely used, higher demands have been posed on their performance, especially cycle performance.

Therefore, further improvement of the cycle performance and high-temperature storage performance of secondary batteries remains an urgent technical challenge to be addressed.

### SUMMARY

An objective of the present application is to provide a secondary battery and a preparation method therefor, which can improve the cycle performance and the high-temperature storage performance of the secondary battery including the same. Another objective of the present application is to provide an electric device including the secondary battery, which can exhibit improved cycle performance and high-temperature storage performance of the secondary battery.

In a first aspect, embodiments of the present application provide a secondary battery. The secondary battery includes a positive electrode plate, where the positive electrode plate includes a positive electrode current collector and a positive electrode film layer disposed on at least one surface of the positive electrode current collector, the positive electrode film layer including a positive electrode active material and a chalcogen-containing material.

According to the embodiments of the present application, the positive electrode film layer of the positive electrode plate in the secondary battery includes the chalcogen-containing material, and the chalcogen includes at least one of sulfur, selenium, or tellurium. In one aspect, the presence of the chalcogen-containing material has been shown to reduce the content of residual alkali, such as Na₂O and/or Na₂CO₃, remaining in the positive electrode film layer during the preparation process. This prevents the corrosion of the positive electrode plate including the positive electrode film layer caused by the residual alkali, as well as the formation of electrolyte residues or other adverse electrochemical reactions, which may otherwise degrade the conductivity of the positive electrode plate. Consequently, it avoids the generation of electrolyte residues from the residual alkali in the secondary battery during electrochemical cycling, as well as other undesirable electrochemical reactions in the secondary battery. On the basis of the improved conductivity of the positive electrode plate, the dynamics performance of the secondary battery including the positive electrode plate is enhanced.

In another aspect, when the secondary battery undergoes the charge-discharge cycle, the initial coulombic efficiency of the secondary battery can be ensured, and the positive electrode film layer of the chalcogen-containing material can form a coating layer in situ on the surface of the positive electrode active material. This coating layer is equivalent to a protective film that can reduce the contact interface between the electrolytic solution and the positive electrode active material, facilitate the enhancement of the stability of the contact interface between the positive electrode active material and the electrolytic solution, and reduce side reactions, thereby improving the cycle performance and the high-temperature storage performance of the battery.

In addition, during the formation process of the secondary battery, Na₂CO₃ present in the residual alkali of the positive electrode plate forms CO₂, which can be released together with other gases produced during the formation of the secondary battery. This prevents gas formation in subsequent charge-discharge chemical cycles, thereby avoiding structural impacts on the secondary battery (such as swelling) that could compromise the electrochemical performance of the secondary battery.

The chalcogen-containing material includes a reducing chalcogen-containing material present in the positive electrode plate. During the formation or subsequent cycling of the secondary battery including the positive electrode plate, the reducing chalcogen-containing material can undergo reduction and oxidation reactions in the electrolytic solution. This leads to the formation of a solid electrolyte interphase film (SEI film) at the interface where the negative electrode plate and the electrolyte are in contact, such as an SEI film including poly(ethylene oxide) (PEO)-based polymer and alkyl lithium sulfate (R-OSO₂ONa) components. The SEI film exhibits excellent elasticity and a certain level of strength, and the SEI film with toughness allows the negative electrode plate to undergo a certain amount of volumetric change during the charge-discharge process at the negative electrode plate-electrolytic solution interface, which is beneficial for protecting the structural stability of the cell, thereby improving the cycle performance and prolonging the service life of the secondary battery. In addition, the SEI film having such components can rapidly transmit active ions, including Na⁺, which is beneficial for improving the dynamics performance of the secondary battery, such as the capability for fast charging and discharging.

In some optional embodiments, a mass proportion of the chalcogen is less than or equal to 3% based on a total mass of the positive electrode film layer, optionally 0.1% to 2%.

According to the embodiments of the present application, the positive electrode film layer includes the chalcogen in a mass content of 0.01% to 3%, and the chalcogen includes at least one of sulfur, selenium, and tellurium. The chalcogen reacts with part of the residual alkali to form an intermediate product during the preparation of the positive electrode plate, i.e., during the stirring process of slurry, such that the pH value of the slurry can be effectively reduced, and the gelation phenomenon of the slurry is alleviated or avoided. In addition, this intermediate product can further react with the residual alkali in the slurry, which can further avoid the occurrence of gelation. This contributes to uniform stirring and proper coating of the slurry, which is beneficial for improving the overall performance of the positive electrode plate, including its uniformity, and enhancing the cycle performance and the dynamics performance of the secondary battery including the positive electrode plate.

In some optional embodiments, the chalcogen-containing material includes a chalcogen-containing elementary substance and/or a chalcogen-containing salt.

According to the embodiments of the present application, the elemental chalcogen exists in the positive electrode plate in a zero valent state, and the chalcogen-containing salt includes reducing salt. The chalcogen-containing salt may further include a salt containing a positive bivalent chalcogen. Because such salt has certain reducibility, a protective film containing an MO component (M includes at least one of Ni, Co, Mn, Fe, and Cu) is formed through the reaction with the residual alkali in the positive electrode plate during the formation and/or cycling of the secondary battery, which is beneficial for improving the interface stability between the positive electrode active material and the electrolytic solution during subsequent cycling, reducing side reactions, and enhancing the cycle performance and the high-temperature storage performance of the secondary battery including the positive electrode plate. In addition, the reaction between the elemental chalcogen and the residual alkali releases additional active ions, including Na⁺ ions, which can compensate for the active ion loss caused by SEI formation. As a result, the content of active ions in the secondary battery is increased, which is conducive to improving the energy density, the energy storage capacity, the power performance, and the cycle life of the secondary battery.

In some optional embodiments, the chalcogen-containing salt includes A2O32- or AO42-, where A represents the chalcogen.

According to the embodiments of the present application, the salt containing chalcogen A is present in the positive electrode plate, which is beneficial for improving the uniformity of the components in the positive electrode film layer of the positive electrode plate, and reacting with the residual alkali in the positive electrode plate to generate a protective film containing an MO component, thereby improving the interface stability between the positive electrode active material and the electrolytic solution during subsequent cycling, reducing side reactions, and enhancing the cycle performance and the high-temperature storage performance of the secondary battery including the positive electrode plate.

According to the embodiments of the present application, the chalcogen-containing salt may be obtained by the reaction between the elemental chalcogen and the positive electrode active material, or may also be directly added.

When the secondary battery including the positive electrode plate is subjected to formation or electrochemical cycling, the positive electrode plate, which contains a reducing chalcogen-containing material, may continue to react with the residual alkali in the positive electrode plate. This reaction reduces the residual alkali content in the positive electrode active material and simultaneously forms an artificial protective film. This protective film, composed of components such as Na₂SO₄, exhibits excellent electrochemical stability, and may be positioned on the surface of the positive electrode active material or exist independently. The presence of this protective film contributes to enhancing the stability of the positive electrode active material contacting with the electrolytic solution in the subsequent cycling process, reducing side reactions, and improving the cycle performance and the high-temperature storage performance of the secondary battery including such positive electrode plate.

In addition, the reaction between the reducing chalcogen-containing salt and the residual alkali releases additional active ions, including Na+ ions, which can compensate for the active ion loss caused by SEI formation. As a result, the content of active ions in the secondary battery is increased, which is conducive to improving the energy density, the energy storage capacity, the power performance, and the cycle life of the secondary battery.

In some optional embodiments, the valence state of the chalcogen includes at least one of zero valent, positive bivalent, positive tetravalent, and positive hexavalent; optionally, the valence state of the chalcogen includes the positive hexavalent and the positive tetravalent.

During the formation and subsequent cycling of the secondary battery including the positive electrode plate, the positive electrode plate contains the elemental chalcogen. The elemental chalcogen reacts with the residual alkali in the positive electrode plate to generate a protective film containing an MO component (M includes at least one of Ni, Co, Mn, Fe, and Cu), which is beneficial for improving the interface stability between the positive electrode active material and the electrolytic solution during subsequent cycling, reducing side reactions, and enhancing the cycle performance and the high-temperature storage performance of the secondary battery including the positive electrode plate. In addition, the reaction between the elemental chalcogen and the residual alkali releases additional active ions, including Na⁺ ions, which can compensate for the active ion loss caused by SEI formation. As a result, the content of active ions in the secondary battery is increased, which is conducive to improving the energy density, the energy storage capacity, the power performance, and the cycle life of the secondary battery.

In some optional embodiments, a ratio of a molar amount n2 of the positive hexavalent chalcogen in the positive electrode film layer to a sum n0 of molar amounts of the zero valent, the positive tetravalent, and the positive hexavalent chalcogens in the positive electrode film layer is (0.5-1):1, optionally (0.7-1):1.

According to the embodiments of the present application, after the secondary battery is formed, the ratio of the molar amount n2 of the positive hexavalent chalcogen in the positive electrode film layer to the sum n0 of the molar amounts of the zero valent, the positive tetravalent, and the positive hexavalent chalcogens in the positive electrode film layer falls within the above range. This indicates that the residual alkali, including the Na₂O and/or Na₂CO₃ with the aforementioned content, is decomposed and consumed, forming a relatively stable chalcogen-containing salt, which is beneficial for maintaining the stability of the secondary battery.

In some optional embodiments, the positive electrode active material includes a layered transition metal oxide.

In some optional embodiments, the layered transition metal oxide includes a transition metal oxide having a structural formula of AₐNi_{b}Co_{c}Mn_{f}M_{d}Oₑ, where 0.5 ≤ a ≤ 1.2, 0 ≤ b ≤ 2, 0 ≤ c ≤ 2, 0 ≤ f ≤ 1, 0 ≤ d ≤ 1.5, 1 ≤ e ≤ 4, and A includes one or more of Li and Na; M includes one or more of Ca, Al, Zr, Zn, Cu, Cr, Mg, Fe, V, Ti, and B; optionally, b + c + d + f = 1, or b + c + d + f = 2; optionally, A further includes K.

According to the embodiments of the present application, the layered transition metal oxide generally exhibits a high active ion storage capacity. The layered transition metal oxide of the above type is capable of intercalating and deintercalating more active ions, including sodium ions, thereby providing larger battery capacity. This allows the battery to store more electric energy and have a longer service life. The high capacity characteristics of the layered transition metal oxide result in a higher energy density of the battery. The layered transition metal oxide has a certain degree of oxidizability, and the redox reaction thereof is beneficial to the structural stability of the material. This helps to reduce the structural change and attenuation of the material, thereby prolonging the cycle life of the battery.

In some optional embodiments, the positive electrode active material includes a coating layer at least partially coating the positive electrode active material, and the coating layer includes MO_{z}, where M includes one or more of Ni, Co, Mn, Fe, and Cu, and 0 < z < 2.

According to the embodiments of the present application, the coating layer on the surface of the positive electrode active material can maintain the stability of the positive electrode active material in electrochemical cycling, and can reduce the contact area between the positive electrode active material and the electrolytic solution.

In some optional embodiments, the coating layer has a thickness of 1 nm to 10 nm.

According to the embodiments of the present application, by controlling the thickness of the coating layer within the above range, the cycle performance of the secondary battery is improved while reducing the contact surface between the positive electrode active material and the electrolytic solution. A thinner protective film may not effectively prevent the contact between the electrolytic solution and the positive electrode active material, while a thicker protective film limits the transmission of ions and electrons, degrading the electrochemical performance of the secondary battery.

In some optional embodiments, the positive electrode film layer includes sodium oxide, and optionally, the mass content of the sodium oxide in the positive electrode film layer is less than or equal to 1000 ppm.

In some optional embodiments, the positive electrode film layer includes sodium carbonate, and the mass content of the sodium carbonate in the positive electrode film layer is less than or equal to 2000 ppm.

According to the embodiments of the present application, the presence of Na₂O and/or Na₂CO₃ with the aforementioned content in the positive electrode film layer included in the secondary battery is beneficial for reducing the corrosion of the positive electrode plate caused by Na₂O and/or Na₂CO₃. The Na₂O and/or Na₂CO₃ present in the positive electrode plate can form electrolyte residues on the positive electrode plate or generate other adverse electrochemical reactions, such that the conductivity of the positive electrode plate is degraded; the presence of Na₂O and/or Na₂CO₃ with the aforementioned content in the positive electrode film layer is beneficial for reducing the electrolyte residues or other adverse electrochemical reactions, thereby improving the conductivity of the positive electrode plate, and enhancing the dynamics performance of the secondary battery including the positive electrode plate.

In addition, the CO₂ generated from Na₂CO₃ in the positive electrode film layer may be released together with other gases formed during the formation process of the secondary battery. After the formation of the secondary battery, when the positive electrode active material contains Na₂CO₃ with the aforementioned content, the generated gases affect the structure of the secondary battery, resulting in phenomena such as swelling and the like, thereby compromising the electrochemical performance of the secondary battery.

In some optional embodiments, the secondary battery is a sodium-ion secondary battery.

In some optional embodiments, the positive electrode film layer includes a sodium compensator.

According to the embodiments of the present application, the chalcogen-containing material participates in the formation of the SEI film and consumes part of the active sodium. The composition includes the sodium compensator, which can supplement the active sodium and simultaneously increase the capacity of the battery, thereby further improving the cycle life (including capacity retention rate and rate capability), the dynamics performance, and the storage life of the battery.

In some optional embodiments, the sodium compensator includes one or more of sodium sulfide, sodium selenide, and sodium nitride.

According to the embodiments of the present application, the chalcogen-containing material may participate in the formation of the SEI film and consume part of the active sodium. The composition includes the sodium compensator, which can supplement the active sodium and simultaneously increase the capacity of the battery, thereby further improving the cycle life (including capacity retention rate and rate capability), the dynamics performance, and the storage life of the battery.

In a second aspect, the embodiments of the present application provide a method for preparing the secondary battery according to the first aspect. The method includes preparing the positive electrode plate:
preparation of a positive electrode slurry: adding a mixture including the positive electrode active material and the chalcogen-containing material into a solvent to form a slurry; and
applying the positive electrode slurry onto at least one surface of the positive electrode current collector to form the positive electrode film layer.

According to the embodiments of the present application, the chalcogen includes at least one of sulfur, selenium, and tellurium. As an example, the chalcogen-containing material includes an elemental chalcogen. The elemental chalcogen can react with at least part of the residual alkali to form an intermediate product during the stirring process of slurry mixture preparation, such that the pH value of the slurry can be effectively reduced, and the gelation phenomenon of the slurry is alleviated or avoided. In addition, this intermediate product can further react with the residual alkali in the slurry during the subsequent process, which can further avoid the occurrence of gelation. This contributes to uniform stirring and proper coating of the slurry, thereby facilitating the preparation of the positive electrode plate from the composition containing the positive electrode active material and the elemental chalcogen, and improving the overall performance of the positive electrode plate, including its uniformity.

In one aspect, the presence of the chalcogen-containing material can reduce the content of residual alkali, such as Na₂O and/or Na₂CO₃, remaining in the positive electrode film layer during the preparation process. This prevents the corrosion of the positive electrode plate including the positive electrode film layer caused by the residual alkali, as well as the formation of electrolyte residues or other adverse electrochemical reactions, which could otherwise degrade the conductivity of the positive electrode plate. Consequently, it avoids the generation of electrolyte residues from the residual alkali in the secondary battery during electrochemical cycling, as well as other undesirable electrochemical reactions in the secondary battery. On the basis of the improved conductivity of the positive electrode plate, the dynamics performance of the secondary battery including the positive electrode plate is enhanced.

In another aspect, when the secondary battery undergoes the charge-discharge cycle, the initial coulombic efficiency of the secondary battery can be ensured, and the positive electrode film layer of the chalcogen-containing material can form a coating layer in situ on the surface of the positive electrode active material. This coating layer is equivalent to a protective film that can reduce the contact interface between the electrolytic solution and the positive electrode active material, facilitate the enhancement of the stability of the contact interface between the positive electrode active material and the electrolytic solution, and reduce side reactions, thereby improving the cycle performance and the high-temperature storage performance of the battery.

In some optional embodiments, the volume-based average particle size Dv50 of the chalcogen-containing material is 50 nm to 1000 nm, optionally 100 nm to 500 nm.

According to the embodiments of the present application, when the volume-based average particle size Dv50 of the chalcogen-containing material falls within in the above range, it facilitates the dispersion of the elemental chalcogen in the slurry and promotes the reaction between the elemental chalcogen and the residual alkali, thereby preventing the slurry from gelation.

In addition, when the volume-based average particle size of the chalcogen-containing material in the positive electrode plate falls within the above range, it facilitates the formation of a uniform and appropriate coating layer on the positive electrode active material during the formation and subsequent cycling of the secondary battery including such positive electrode plate, while protecting the structure of the positive electrode plate. This coating layer contributes to enhancing the interface stability between the positive electrode active material and the electrolytic solution in the subsequent cycling process, reducing side reactions, and improving the cycle performance and the high-temperature storage performance of the secondary battery including the positive electrode plate.

In some optional embodiments, the valence state of the chalcogen includes at least one of zero valent, positive bivalent, and positive hexavalent; optionally, the valence state of the chalcogen includes the zero valent and the positive bivalent.

According to the embodiments of the present application, when the chalcogen in the above valence states is present in the positive electrode plate, and the secondary battery including the positive electrode plate undergoes formation and/or subsequent cycling, it is beneficial for improving the overall electrochemical performance of the secondary battery including the positive electrode plate.

In some optional embodiments, a ratio of a sum n1 of molar amounts of the zero valent and the positive bivalent chalcogens in the positive electrode film layer to a sum n0 of molar amounts of the zero valent, the positive bivalent, and the positive hexavalent chalcogens in the positive electrode film layer is (0.5-1):1, optionally (0.8-1): 1.

According to the embodiments of the present application, by controlling the sum of the molar amounts of the zero valent and the positive bivalent chalcogens in the positive electrode film layer and the total molar amount of the chalcogens in the positive electrode film layer, the amount of the protective film in the positive electrode film layer can be controlled. This not only can protect the positive electrode active material, but also can improve the overall performance of the secondary battery.

In some optional embodiments, the preparation of the positive electrode slurry includes: adding a mixture including the positive electrode active material, the chalcogen-containing material, and the sodium compensator into a solvent to form a slurry.

According to the embodiments of the present application, the chalcogen-containing material participates in the formation of the SEI film and consumes part of the active sodium. The composition includes the sodium compensator, which can supplement the active sodium and simultaneously increase the capacity of the battery, thereby further improving the cycle life (including capacity retention rate and rate capability), the dynamics performance, and the storage life of the battery.

In some optional embodiments, the mass proportion of the sodium compensator is less than or equal to 3% based on the total mass of the mixture, optionally 0.1% to 2%. The addition of an appropriate amount of sodium compensator can supplement the active sodium and simultaneously increase the capacity of the battery, thereby further improving the cycle life (including capacity retention rate and rate capability), the dynamics performance, and the storage life of the battery.

In some optional embodiments, the volume-based average particle size Dv50 of the sodium compensator is 1 µm to 5 µm.

According to the embodiments of the present application, when the volume-based average particle size Dv50 of the sodium compensator falls within the above range, it is beneficial for protecting the structural stability of the positive electrode plate, improving the porosity of the positive electrode plate, and enhancing the dynamics performance of the positive electrode plate.

In some optional embodiments, the mass ratio of the chalcogen-containing material to the sodium compensator is 1:(0.5-5), optionally 1:(0.5-3).

According to the embodiments of the present application, the chalcogen-containing material reacts with the residual alkali in the slurry to generate an intermediate product, and part of the unreacted elemental chalcogen and the intermediate product participate in the formation of the SEI film to consume a certain amount of active sodium. By controlling the mass ratio of the consumed active sodium to the sodium compensator within the above range, it is possible, in one aspect, to effectively utilize the elemental chalcogen and exert its function, and in another aspect, to supplement the content of the active sodium, thereby increasing the capacity of the battery and further improving the cycle life and the storage life of the battery.

When the mass ratio of the chalcogen-containing material to the sodium compensator falls within the above range, it can avoid the excessive content of the chalcogen-containing material in the positive electrode film layer, which could otherwise affect the capacity and the dynamics performance of the positive electrode plate including the positive electrode film layer during the charge-discharge cycles of the secondary battery. Meanwhile, it can avoid the excessive content of the sodium compensator in the positive electrode film layer, which could otherwise impact the performance, the stability, and the safety of the secondary battery.

In some optional embodiments, the ratio of the volume-based average particle size Dv50 of the chalcogen-containing material to the volume-based average particle size Dv50 of the sodium compensator is 1:(1-5), optionally 1:(1-2).

According to the embodiments of the present application, by controlling the ratio of the volume-based average particle size Dv50 of the chalcogen-containing material to the volume-based average particle size Dv50 of the sodium compensator, it is beneficial for improving the uniformity of the positive electrode plate containing the composition, and enhancing the cycle performance and the dynamics performance of the secondary battery including the positive electrode plate.

In a fifth aspect, the embodiments of the present application provide an electric device. The electric device includes the secondary battery according to the fourth aspect. The secondary battery exhibits improved cycle performance and high-temperature storage performance.

### BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skills in the art may still derive other drawings from these drawings without creative efforts.
FIG. 1(a) shows the effect of the slurry according to Example 10 of the present application, and FIG. 1(b) shows the effect of the slurry according to Comparative Example 1 of the present application;
FIG. 2 shows the viscosity versus time curves of the slurry according to Comparative Example 1 and Example 10 of the present application;
FIG. 3 shows a schematic diagram of an implementation of a secondary battery according to an embodiment of the present application;
FIG. 4 shows an exploded schematic diagram of the secondary battery shown in FIG. 3 according to an embodiment of the present application; and
FIG. 5 shows a schematic diagram of an implementation of an electric device including the secondary battery according to an embodiment of the present application as a power source.

The drawings are not necessarily to scale.

### DETAILED DESCRIPTION

Hereinafter, embodiments specifically disclosing the electrode assembly and the preparation method therefor, the secondary battery, the battery module, the battery pack, and the electric device of the present application are described in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer ≥ 2, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless specifically stated otherwise, the terms "interconnect" and "connect" should be interpreted in their broad senses in the present application, and may be, for example, a fixed connection, a detachable connection, or an integral connection; or a direct connection, an indirect connection via an intermediate, or a communication between interiors of two elements. For those of ordinary skill in the art, the specific meanings of the aforementioned terms in the present application can be understood according to specific conditions.

Unless otherwise specified, in the present application, the term "attach" refers to the connection through methods such as adhesion, coating, or the like.

Unless otherwise specified, in the present application, the terms "first", "second", "third", "fourth" and the like are used to distinguish different objects and are not intended to describe a specific order or priority.

Unless otherwise specified, in the present application, the term "active ion" refers to an ion that can be intercalated and deintercalated back and forth between the positive and negative electrodes of the secondary battery, including but not limited to, lithium ion, sodium ion, and the like.

The expression "more" in the present application means two or more (including two).

The secondary battery mentioned in the embodiments of the present application may be a lithium-ion battery, a sodium-ion battery, a lithium metal battery, a sodium metal battery, or the like. This is not limited in the embodiments of the present application.

The secondary battery includes an electrode assembly and an electrolyte. The electrode assembly includes a positive electrode plate, a negative electrode plate, and a separator disposed between the positive electrode plate and the negative electrode plate. The positive electrode plate includes a positive electrode current collector and a positive electrode film layer disposed on at least one side of the positive electrode current collector.

The positive electrode film layer includes a positive electrode active material. The positive electrode active material mainly includes a layered transition metal oxide positive electrode material, a polyanionic positive electrode material, and a Prussian blue positive electrode material. Some of the positive electrode active materials in the positive electrode plate enable the positive electrode film layer to exhibit high alkalinity.

Taking a homogeneous slurry system of the positive electrode plate in the conventional secondary battery as an example, the positive electrode film layer mainly includes a positive electrode active material, polyvinylidene difluoride (PVDF), conductive carbon black (SP), and N-methylpyrrolidone (NMP). Although PVDF provides strong adhesive strength and electrochemical stability, it exhibits poor alkali resistance. PVDF undergoes an elimination reaction under the action of an alkaline sodium-ion material to generate water, while NMP serves as a non-aqueous solvent. The resulting double bonds generated from the elimination reaction of PVDF induce a cross-linking reaction between PVDF molecular chains, leading to gelation. The positive electrode active material with oxidizability readily reacts with CO₂ and H₂O in the air, resulting in the formation of NaOH and Na₂CO₃ on the surface of the material. As an example, the residual alkali content and pH test performed on the positive electrode film layer of the finished positive electrode plate reveals that: the layered oxide positive electrode material has a residual NaOH content of 2.37%, a Na₂CO₃ content of 2.10%, and a pH of 13.1.

As another example, in the positive electrode film layer used in the lithium secondary battery, lithium carbonate is employed as the lithium source, and the residual content of LiOH and Li₂CO₃ is generally less than 1%, with the pH ranging from 8 to 11.

In comparison, the sodium-ion material exhibits significantly stronger alkalinity than the lithium-ion material, and the excessive residual alkali on the surface of the sodium-ion positive electrode material not only deteriorates the processing performance of the slurry, but also greatly affects the electrochemical performance of the secondary battery. For example, the residual alkali on the surface of the positive electrode active material brings about a series of side effects, such as low initial efficiency, and degraded cycling and storage performance.

In view of this, the technical solutions according to the embodiments of the present application provide a secondary battery and a preparation method therefor, which can at least reduce the residual alkali content in the positive electrode film layer of the positive electrode plate in the secondary battery, thereby improving the cycle performance and the high-temperature storage performance of the secondary battery.

### Secondary Battery

In a first aspect, embodiments of the present application provide a secondary battery. The secondary battery includes a positive electrode plate, where the positive electrode plate includes a positive electrode current collector and a positive electrode film layer disposed on at least one surface of the positive electrode current collector, the positive electrode film layer including a positive electrode active material and a chalcogen-containing material.

According to the embodiments of the present application, the positive electrode film layer of the positive electrode plate in the secondary battery includes the chalcogen-containing material, and the chalcogen includes at least one of sulfur, selenium, or tellurium. In one aspect, the presence of the chalcogen-containing material has been shown to reduce the content of residual alkali, such as Na₂O and/or Na2CO3, remaining in the positive electrode film layer during the preparation process. This prevents the corrosion of the positive electrode plate including the positive electrode film layer caused by the residual alkali, as well as the formation of electrolyte residues or other adverse electrochemical reactions, which could otherwise degrade the conductivity of the positive electrode plate. Consequently, it avoids the generation of electrolyte residues from the residual alkali in the secondary battery during electrochemical cycling, as well as other undesirable electrochemical reactions in the secondary battery. On the basis of the improved conductivity of the positive electrode plate, the dynamics performance of the secondary battery including such positive electrode plate is enhanced.

In another aspect, when the secondary battery undergoes the charge-discharge cycle, the initial coulombic efficiency of the secondary battery can be ensured, and the positive electrode film layer of the chalcogen-containing material can form a coating layer in situ on the surface of the positive electrode active material. This coating layer is equivalent to a protective film that can reduce the contact interface between the electrolytic solution and the positive electrode active material, facilitate the enhancement of the stability of the contact interface between the positive electrode active material and the electrolytic solution, and reduce side reactions, thereby improving the cycle performance and the high-temperature storage performance of the battery.

In addition, during the formation process of the secondary battery, Na₂CO₃ present in the residual alkali of the positive electrode plate forms CO₂, which can be released together with other gases produced during the formation of the secondary battery. This prevents gas formation in subsequent charge-discharge chemical cycles, thereby avoiding structural impacts on the secondary battery (such as swelling) that could compromise the electrochemical performance of the secondary battery.

The chalcogen-containing material includes a reducing chalcogen-containing material present in the positive electrode plate. During the formation or subsequent cycling of the secondary battery including the positive electrode plate, the reducing chalcogen-containing material can undergo reduction and oxidation reactions in the electrolytic solution. This leads to the formation of a solid electrolyte interphase film (SEI film) at the interface where the negative electrode plate and the electrolyte are in contact, such as an SEI film including poly(ethylene oxide) (PEO)-based polymer and alkyl lithium sulfate (R-OSO₂ONa) components. The SEI film exhibits excellent elasticity and a certain level of strength, and the SEI film with toughness allows the negative electrode plate to undergo a certain amount of volumetric change during the charge-discharge process at the negative electrode plate-electrolytic solution interface, which is beneficial for protecting the structural stability of the cell, thereby improving the cycle performance and prolonging the service life of the secondary battery. In addition, the SEI film having such components can rapidly transmit active ions, including Na⁺, which is beneficial for improving the dynamics performance of the secondary battery, such as the capability for fast charging and discharging. In some optional embodiments, the secondary battery includes a solid electrolyte membrane positioned on the surface of the negative electrode plate, and the mass proportion of the chalcogen is less than or equal to 2% based on the total mass of the solid electrolyte membrane, optionally 0.1% to 1.5%.

The type of the secondary battery is not particularly limited in the present application. For example, the secondary battery may be a lithium-ion battery, a sodium-ion battery, or the like. Optionally, the secondary battery is a sodium-ion battery.

For example, the positive electrode current collector is provided with two surfaces opposite to each other in its own thickness direction, and the positive electrode film layer is disposed on any one or both of the two opposite surfaces of the positive electrode current collector.

In some optional embodiments, a mass proportion of the chalcogen is less than or equal to 3% based on a total mass of the positive electrode film layer, optionally 0.1% to 2%.

Optionally, the positive electrode film layer includes the chalcogen in a mass content of any one of 0.01%, 0.05%, 0.1%, 0.15%, 0.20%, 0.25%, 0.30%, 0.35%, 0.40%, 0.45%, 0.5%, 0.55%, 0.60%, 0.65%, 0.70%, 0.75%, 0.80%, 0.85%, 0.90%, 0.95%, 0.10%, 0.15%, 0.20%, 0.25%, 0.30%, 0.35%, 0.40%, 0.45%, 0.50%, 0.6%, 0.7%, 0.8%, 0.9%, 1.0%, 1.5%, 2.0%, 2.5%, or 3.0%, or a range formed by any combination thereof.

According to the embodiments of the present application, the positive electrode film layer includes the chalcogen in a mass content of 0.01% to 3%, and the chalcogen includes at least one of sulfur, selenium, and tellurium. The chalcogen reacts with part of the residual alkali to form an intermediate product during the preparation of the positive electrode plate, i.e., during the stirring process of slurry, such that the pH value of the slurry can be effectively reduced, and the gelation phenomenon of the slurry is alleviated or avoided. In addition, this intermediate product can further react with the residual alkali in the slurry, which can further avoid the occurrence of gelation. This contributes to uniform stirring and proper coating of the slurry, which is beneficial for improving the overall performance of the positive electrode plate, including its uniformity, and enhancing the cycle performance and the dynamics performance of the secondary battery including the positive electrode plate.

According to the embodiments of the present application, the positive electrode film layer includes a reducing chalcogen-containing material in a mass content of 0.01% to 3%. The reducing chalcogen-containing material may be an elemental chalcogen, or may exist in the form of a reducing intermediate product (A₂O₃²⁻) in the positive electrode plate that has not undergone or has undergone a few electrochemical cycles.

In some optional embodiments, the chalcogen-containing material includes a chalcogen-containing elementary substance and/or a chalcogen-containing salt.

According to the embodiments of the present application, the elemental chalcogen exists in the positive electrode plate in a zero valent state, and the chalcogen-containing salt includes reducing salt. The chalcogen-containing salt may further include a salt containing a positive bivalent chalcogen. Because such salt has certain reducibility, a protective film containing an MO component (M includes at least one of Ni, Co, Mn, Fe, and Cu) is formed through the reaction with the residual alkali in the positive electrode plate during the formation and/or cycling of the secondary battery, which is beneficial for improving the interface stability between the positive electrode active material and the electrolytic solution during subsequent cycling, reducing side reactions, and enhancing the cycle performance and the high-temperature storage performance of the secondary battery including the positive electrode plate. In addition, the reaction between the elemental chalcogen and the residual alkali releases additional active ions, including Na⁺ ions, which can compensate for the active ion loss caused by SEI formation. As a result, the content of active ions in the secondary battery is increased, which is conducive to improving the energy density, the energy storage capacity, the power performance, and the cycle life of the secondary battery.

In some optional embodiments, the chalcogen-containing salt includes A2O32- or AO42-, where A represents the chalcogen.

According to the embodiments of the present application, the salt containing chalcogen A is present in the positive electrode plate, which is beneficial for improving the uniformity of the components in the positive electrode film layer of the positive electrode plate, and reacting with the residual alkali in the positive electrode plate to generate a protective film containing an MO component, thereby improving the interface stability between the positive electrode active material and the electrolytic solution during subsequent cycling, reducing side reactions, and enhancing the cycle performance and the high-temperature storage performance of the secondary battery including the positive electrode plate.

According to the embodiments of the present application, the chalcogen-containing salt may be obtained by the reaction between the elemental chalcogen and the positive electrode active material, or may also be directly added.

When the secondary battery including the positive electrode plate is subjected to formation or electrochemical cycling, the positive electrode plate, which contains a reducing chalcogen-containing material, may continue to react with the residual alkali in the positive electrode plate. This reaction reduces the residual alkali content in the positive electrode active material and simultaneously forms an artificial protective film. This protective film, composed of components such as Na₂SO₄, exhibits excellent electrochemical stability, and may be positioned on the surface of the positive electrode active material or exist independently. The presence of this protective film contributes to enhancing the stability of the positive electrode active material contacting with the electrolytic solution in the subsequent cycling process, reducing side reactions, and improving the cycle performance and the high-temperature storage performance of the secondary battery including such positive electrode plate.

In addition, the reaction between the reducing chalcogen-containing salt and the residual alkali releases additional active ions, including Na+ ions, which can compensate for the active ion loss caused by SEI formation. As a result, the content of active ions in the secondary battery is increased, which is conducive to improving the energy density, the energy storage capacity, the power performance, and the cycle life of the secondary battery.

In some optional embodiments, the valence state of the chalcogen includes at least one of zero valent, positive bivalent, positive tetravalent, and positive hexavalent; optionally, the valence state of the chalcogen includes the positive hexavalent and the positive tetravalent.

In some optional embodiments, the positive electrode film layer contains 0.01% to 3% of the positive bivalent chalcogen based on the total mass of the positive electrode film layer.

As an example, the reaction between the reducing chalcogen-containing salt and the residual alkali is represented by formula (1):

Na₂S₂O₃ + Na₂CO₃ - 8e⁻ → 2 Na₂SO₄ + 5CO₂ + 8Na⁺ (1).

During the formation and subsequent cycling of the secondary battery including the positive electrode plate, the positive electrode plate contains the elemental chalcogen. The elemental chalcogen reacts with the residual alkali in the positive electrode plate to generate a protective film containing an MO component (M includes at least one of Ni, Co, Mn, Fe, and Cu), which is beneficial for improving the interface stability between the positive electrode active material and the electrolytic solution during subsequent cycling, reducing side reactions, and enhancing the cycle performance and the high-temperature storage performance of the secondary battery including the positive electrode plate. In addition, the reaction between the elemental chalcogen and the residual alkali releases additional active ions, including Na+ ions, which can compensate for the active ion loss caused by SEI formation. As a result, the content of active ions in the secondary battery is increased, which is conducive to improving the energy density, the energy storage capacity, the power performance, and the cycle life of the secondary battery.

In some optional embodiments, the positive electrode film layer includes the zero valent and positive tetravalent chalcogens.

As an example, the reaction between the elemental chalcogen and the residual alkali is represented by formula (2):

2NaMO₂ + S + 2Na₂CO₃ - 4e⁻ → 2MO + Na₂SO₄ + 2CO₂ + 4Na⁺ (2).

In some optional embodiments, the Na2SO4-containing protective film is positioned on the surface of the MO component. Positioning the Na2SO4-containing protective film on the surface of the MO component can further improve the stability of the positive electrode active material in contact with the electrolytic solution during subsequent cycling, reduce side reactions, and contribute to enhancing the cycle performance and the high-temperature storage performance of the secondary battery including the positive electrode plate.

In some optional embodiments, a ratio of a molar amount n2 of the positive hexavalent chalcogen in the positive electrode film layer to a sum n0 of molar amounts of the zero valent, the positive tetravalent, and the positive hexavalent chalcogens in the positive electrode film layer is (0.5-1):1, optionally (0.7-1):1.

Optionally, after the secondary battery is formed, the ratio of the molar amount n2 of the positive hexavalent chalcogen in the positive electrode film layer to the sum n0 of the molar amounts of the zero valent, the positive tetravalent, and the positive hexavalent chalcogens in the positive electrode film layer may be any value of 0.5:1, 0.6:1, 0.7:1, 0.8:1, 0.9:1, or 1.0:1, or within a range formed by any combination thereof.

The method for detecting the molar ratio of chalcogens in different valence states in the positive electrode plate includes: disassembling the secondary battery after the charge-discharge cycle to obtain the positive electrode plate, cutting a 1×1 cm sample from the positive electrode plate, drying the prepared sample thoroughly, then placing the sample into an X-ray photoelectron spectrometer for testing, collecting the data showing the energy spectrum peak positions and intensities of the chalcogens in different valence states, and analyzing the data. The ratio of peak areas corresponding to different valence states is used as the content ratio of the respective valence states.

According to the embodiments of the present application, after the secondary battery is formed, the ratio of the molar amount n2 of the positive hexavalent chalcogen in the positive electrode film layer to the sum n0 of the molar amounts of the zero valent, the positive tetravalent, and the positive hexavalent chalcogens in the positive electrode film layer falls within the above range. This indicates that the residual alkali, including the Na₂O and/or Na₂CO₃ with the aforementioned content, is decomposed and consumed, forming a relatively stable chalcogen-containing salt, which is beneficial for maintaining the stability of the secondary battery.

The positive electrode film layer includes a positive electrode active material, which may be the positive electrode active material known in the art for use in battery cells.

In some optional embodiments, the positive electrode active material includes a layered transition metal oxide.

In some optional embodiments, the layered transition metal oxide includes a transition metal oxide having a structural formula of AₐNi_{b}Co_{c}Mn_{f}M_{d}Oₑ, where 0.5 ≤ a ≤ 1.2, 0 ≤ b ≤ 2, 0 ≤ c ≤ 2, 0 ≤ f ≤ 1, 0 ≤ d ≤ 1.5, 1 ≤ e ≤ 4, and A includes one or more of Li and Na; M includes one or more of Ca, Al, Zr, Zn, Cu, Cr, Mg, Fe, V, Ti, and B; optionally, b + c + d + f = 1, or b + c + d + f = 2; optionally, A further includes K. In some optional embodiments, a + 2b + 2c + 2f + 2d - 2e = 0, or a + 2b + 2c + 4f + 2d - 2e = 0, or a + 2b + 2c + 3f + 2d - 2e = 0.

According to the embodiments of the present application, the layered transition metal oxide generally exhibits a high active ion storage capacity. The layered transition metal oxide of the above type is capable of intercalating and deintercalating more active ions, including sodium ions, thereby providing larger battery capacity. This allows the battery to store more electric energy and have a longer service life. The high capacity characteristics of the layered transition metal oxide result in a higher energy density of the battery. The layered transition metal oxide has a certain degree of oxidizability, and the redox reaction thereof is beneficial to the structural stability of the material. This helps to reduce the structural change and attenuation of the material, thereby prolonging the cycle life of the battery.

For example, when the battery cell is a lithium-ion battery cell or a lithium metal battery cell, the positive electrode active material may include one or more of a lithium transition metal oxide, an olivine-structured lithium-containing phosphate, and respective modified compounds thereof. Examples of the lithium transition metal oxide may include one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the olivine-structured lithium-containing phosphate may include one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof. However, the present application is not limited to these materials, and other conventionally known materials that can be used as positive electrode active materials may also be used.

In some embodiments, to further increase the energy density of the battery cell, the positive electrode active material may include a lithium transition metal oxide having the general formula of LiₐNi_{b}Co_{c}M_{d}OₑA_{f}, where 0.8 ≤ a ≤ 1.2, 0.5 ≤ b < 1, 0 < c < 1, 0 < d < 1, 1 ≤ e ≤ 2, 0 ≤ f ≤ 1, M includes one or more selected from Mn, Al, Zr, Zn, Cu, Cr, Mg, Fe, V, Ti, and B, and A includes one or more selected from N, F, S, and Cl.

As an example, the positive electrode active material may include one or more of LiCoO₂, LiNiO₂, LiMnO₂, LiMn₂O₄, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), and LiNi_{0.85}Co_{0.15}Al_{0.05}O₂.

When the secondary battery is a sodium-ion battery cell or a sodium metal battery cell, the positive electrode active material may include, but is not limited to, one or more of a sodium-containing transition metal oxide, a polyanionic material (such as phosphate, fluorophosphate, pyrophosphate, and sulfate), and a Prussian blue material.

As an example, the positive electrode active material may include one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Prussian blue materials, and materials with general formula XₚM'_{q}(PO₄)ᵣOₓY₃₋ₓ. In the general formula XₚM'_{q}(PO₄)ᵣOₓY₃₋ₓ, 0 < p ≤ 4, 0 < q ≤ 2, 1 ≤ r ≤ 3, and 0 ≤ x ≤ 2; X includes one or more selected from H⁺, Li⁺, Na⁺, K⁺, and NH₄⁺; M' is a transition metal cation, optionally including one or more selected from V, Ti, Mn, Fe, Co, Ni, Cu and Zn; Y is a halogen anion, optionally including one or more selected from F, Cl, and Br.

The modified compounds of the above positive electrode active materials may be obtained by doping modification and/or surface-coating modification of the positive electrode active materials.

In some optional embodiments, the positive electrode active material includes a coating layer at least partially coating the positive electrode active material, and the coating layer includes MO_{z}, where M includes one or more of Ni, Co, Mn, Fe, and Cu, and 0 < z < 2.

As an example, MO_{z} includes any one or more of NiO, CoO, MnO, Fe₂O₃, and CuO.

According to the embodiments of the present application, the coating layer on the surface of the positive electrode active material can maintain the stability of the positive electrode active material in electrochemical cycling, and can reduce the contact area between the positive electrode active material and the electrolytic solution.

In some optional embodiments, the coating layer has a thickness of 1 nm to 10 nm.

According to the embodiments of the present application, by controlling the thickness of the coating layer within the above range, the cycle performance of the secondary battery is improved while reducing the contact surface between the positive electrode active material and the electrolytic solution. A thinner protective film may not effectively prevent the contact between the electrolytic solution and the positive electrode active material, while a thicker protective film limits the transmission of ions and electrons, degrading the electrochemical performance of the secondary battery.

In some optional embodiments, the positive electrode film layer includes sodium oxide, and optionally, the mass content of the sodium oxide in the positive electrode film layer is less than or equal to 1000 ppm.

In some optional embodiments, the positive electrode film layer includes sodium carbonate, and the mass content of the sodium carbonate in the positive electrode film layer is less than or equal to 2000 ppm.

According to the embodiments of the present application, the presence of Na₂O and/or Na₂CO₃ with the aforementioned content in the positive electrode film layer included in the secondary battery is beneficial for reducing the corrosion of the positive electrode plate caused by Na₂O and/or Na₂CO₃. The Na₂O and/or Na₂CO₃ present in the positive electrode plate can form electrolyte residues on the positive electrode plate or generate other adverse electrochemical reactions, such that the conductivity of the positive electrode plate is degraded; the presence of Na₂O and/or Na₂CO₃ with the aforementioned content in the positive electrode film layer is beneficial for reducing the electrolyte residues or other adverse electrochemical reactions, thereby improving the conductivity of the positive electrode plate, and enhancing the dynamics performance of the secondary battery including the positive electrode plate.

In addition, the CO₂ generated from Na₂CO₃ in the positive electrode film layer may be released together with other gases formed during the formation process of the secondary battery. After the formation of the secondary battery, when the positive electrode active material contains Na₂CO₃ with the aforementioned content, the generated gases affect the structure of the secondary battery, resulting in phenomena such as swelling and the like, thereby compromising the electrochemical performance of the secondary battery.

As an example, the method for detecting Na₂O and/or Na₂CO₃ includes: disassembling the secondary battery after electrochemical charge-discharge cycle to obtain the positive electrode plate, scraping powder, and then determining the content of Na₂O and Na₂CO₃, respectively, by an acid-base titration test. The detection may be made when the number of charge-discharge cycles of the secondary battery is less than or equal to 100.

In some optional embodiments, the secondary battery is a sodium-ion secondary battery.

In some optional embodiments, the positive electrode film layer includes a sodium compensator.

According to the embodiments of the present application, the chalcogen-containing material participates in the formation of the SEI film and consumes part of the active sodium. The composition includes the sodium compensator, which can supplement the active sodium and simultaneously increase the capacity of the battery, thereby further improving the cycle life (including capacity retention rate and rate capability), the dynamics performance, and the storage life of the battery.

In some optional embodiments, the sodium compensator includes one or more of sodium sulfide, sodium selenide, or sodium nitride.

According to the embodiments of the present application, the chalcogen-containing material may participate in the formation of the SEI film and consume part of the active sodium. The composition includes the sodium compensator, which can supplement the active sodium and simultaneously increase the capacity of the battery, thereby further improving the cycle life (including capacity retention rate and rate capability), the dynamics performance, and the storage life of the battery.

In some embodiments, the positive electrode film layer further optionally includes a positive electrode conductive agent. The present application does not particularly limit the type of the positive electrode conductive agent. As an example, the positive electrode conductive agent includes one or more of superconducting carbon, conductive graphite, acetylene black, carbon black, Ketjen black, a carbon dot, a carbon nanotube, graphene, and a carbon nanofiber.

In some embodiments, the positive electrode film layer further optionally includes a positive electrode binder. The present application does not particularly limit the type of the positive electrode binder. As an example, the positive electrode binder may include at least one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, a metal foil or a composite current collector may be used as the positive electrode current collector. As an example of the metal foil, an aluminum foil may be used. The composite current collector may include a polymer material substrate and a metal material layer formed on at least one surface of the polymer material substrate. As an example, the metal material may include one or more of aluminum, an aluminum alloy, nickel, a nickel alloy, titanium, a titanium alloy, silver, and a silver alloy. As an example, the polymer material substrate may include one or more of polypropylene (PP), polyethylene terephthalate (PET), polybutylene terephthalate (PBT), polystyrene (PS), and polyethylene (PE).

### [Negative Electrode Plate]

The composition, structure and the like of the negative electrode plate may be selected according to the type of battery cell, which is not limited in the embodiments of the present application.

For example, when the battery cell is a lithium-ion battery cell or a sodium-ion battery cell, the negative electrode plate includes a negative electrode current collector and a negative electrode film layer disposed on at least one surface of the negative electrode current collector and including a negative electrode active material. For example, the negative electrode current collector is provided with two surfaces opposite to each other in its own thickness direction, and the negative electrode film layer is disposed on any one or both of the two opposite surfaces of the negative electrode current collector.

The negative electrode active material is capable of deintercalating and intercalating active ions (e.g., lithium ions and sodium ions), and materials known in the art may be used as the negative electrode active material. As an example, the negative electrode active material includes, but is not limited to, at least one or more of natural graphite, artificial graphite, soft carbon, hard carbon, a silicon-based material, a tin-based material, and lithium titanate. The silicon-based material may include one or more of elemental silicon, an oxide of silicon, a silicon-carbon composite, a silicon-nitrogen composite, and a silicon alloy material. The tin-based material may include one or more of elemental tin, an oxide of tin, and a tin alloy material. However, the present application is not limited to these materials, and other conventional materials that can be used as negative electrode active materials may also be used.

In some embodiments, the negative electrode film layer further optionally includes a negative electrode conductive agent. The present application does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

In some embodiments, the negative electrode film layer further optionally includes a negative electrode binder. The present application does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the negative electrode film layer further optionally includes other auxiliary agents. As an example, other auxiliary agents may include a thickener, such as sodium carboxymethylcellulose (CMC-Na) or a PTC thermistor material.

In some embodiments, a metal foil or a composite current collector may be used as the negative electrode current collector. As an example of the metal foil, a copper foil may be used. The composite current collector may include a polymer material substrate and a metal material layer formed on at least one surface of the polymer material substrate. As an example, the metal material may include one or more of copper, a copper alloy, nickel, a nickel alloy, titanium, a titanium alloy, silver, and a silver alloy. As an example, the polymer material substrate may include one or more of polypropylene (PP), polyethylene terephthalate (PET), polybutylene terephthalate (PBT), polystyrene (PS), and polyethylene (PE).

The negative electrode film layer is generally formed by applying the negative electrode slurry onto the negative electrode current collector, followed by drying and cold pressing. The negative electrode slurry is generally formed by dispersing a negative electrode active material, an optional conductive agent, an optional binder, and other optional auxiliary agents in a solvent and uniformly stirring. The solvent may be N-methylpyrrolidone (NMP) or deionized water, but is not limited thereto.

The negative electrode plate does not exclude additional functional layers other than the negative electrode film layer. For example, in some embodiments, the negative electrode plate of the present application may further include a conductive bottom coating (e.g., composed of a conductive agent and a binder) disposed on the surface of the negative electrode current collector and positioned between the negative electrode current collector and the negative electrode film layer; in some embodiments, the negative electrode plate of the present application may further include a protective film covering the surface of the negative electrode film layer.

When the battery cell is a lithium metal battery cell, the negative electrode plate may not include a negative electrode active material capable of deintercalating and intercalating active ions. For example, in some embodiments, the negative electrode plate may include a lithium foil or a lithium alloy foil; in some other embodiments, the negative electrode plate includes a mesh-like or foam-like three-dimensional skeleton layer, such as foam copper (or copper alloy), foam nickel (or nickel alloy), a copper (or copper alloy) mesh, or a nickel (or nickel alloy) mesh.

When the battery cell is a sodium metal battery cell, the negative electrode plate may not include a negative electrode active material capable of deintercalating and intercalating active ions. For example, in some embodiments, the negative electrode plate may include a sodium foil or a sodium alloy foil; in some other embodiments, the negative electrode plate includes a mesh-like or foam-like three-dimensional skeleton layer, such as foam copper (or copper alloy), foam nickel (or nickel alloy), foam aluminum (or aluminum alloy), a copper (or copper alloy) mesh, a nickel (or nickel alloy) mesh, or an aluminum (or aluminum alloy) mesh.

### [Electrolyte]

In some embodiments, the secondary battery includes an electrolyte. The electrolyte conducts active ions between the positive electrode plate and the negative electrode plate. The present application has no specific restrictions on the type of the electrolyte, which can be selected according to needs. For example, the electrolyte may be selected from at least one of a solid-state electrolyte and a liquid-state electrolyte (i.e., an electrolytic solution).

In some embodiments, the electrolyte is an electrolytic solution. The electrolytic solution includes an electrolyte salt and a solvent.

The types of the electrolyte salt are not particularly limited, and a choice can be made as needed in practice. For example, the electrolyte salt includes one or more selected from a lithium salt for the lithium-ion battery and a sodium salt for the sodium-ion battery. As an example, the lithium salt includes one or more selected from lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP). As an example, the sodium salt includes one or more selected from NaPF₆, NaClO₄, NaBCl₄, NaCF₃SO₃, NaTFSI, NaFSI, NaBF₄, NaBOB, NaAsF₆, NaClO₄, and Na(CH₃)C₆H₄SO₃. The sodium salt may be selected from one or more of the above.

The types of the solvent are not particularly limited, and a choice can be made as needed in practice. In some embodiments, as an example, the solvent may include one or more selected from ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film-forming additive or a positive electrode film-forming additive, or may include an additive capable of improving certain properties of the battery, such as an additive for improving the overcharge performance of the battery, an additive for improving the high-temperature performance of the battery, or an additive for improving the low-temperature power performance of the battery.

In some embodiments, the secondary battery may include an outer packaging. The outer packaging can be used for packaging the electrode assembly and the electrolyte described above.

In some embodiments, the outer packaging of the secondary battery may be a hard shell, such as a hard plastic shell, an aluminum shell, or a steel shell. The outer packaging of the secondary battery may also be a soft pack, such as a pouch-type soft pack. The soft pack may be made of plastic, such as one or more of polypropylene (PP), polybutylene terephthalate (PBT), polybutylene succinate (PBS), and the like.

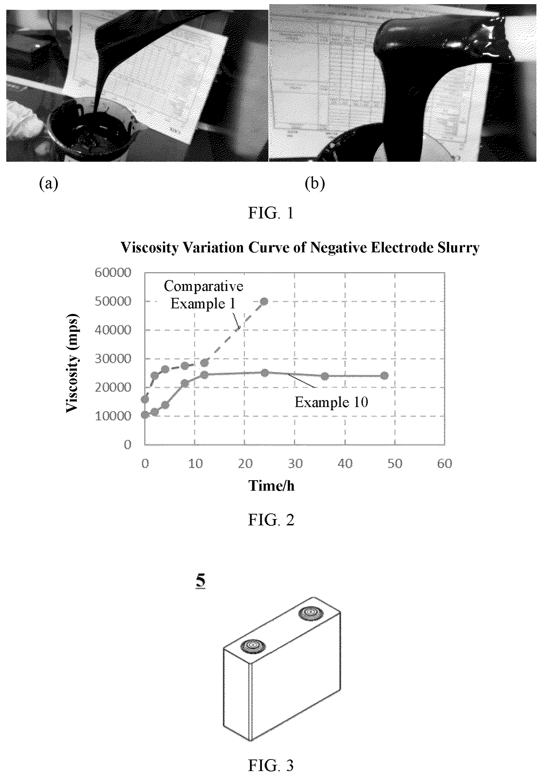

The present application does not particularly limit the shape of the secondary battery, and it may have a flat shape, a rectangular parallelepiped shape, or other shapes. FIG. 3 shows a secondary battery 5 having a rectangular parallelepiped structure as one example.

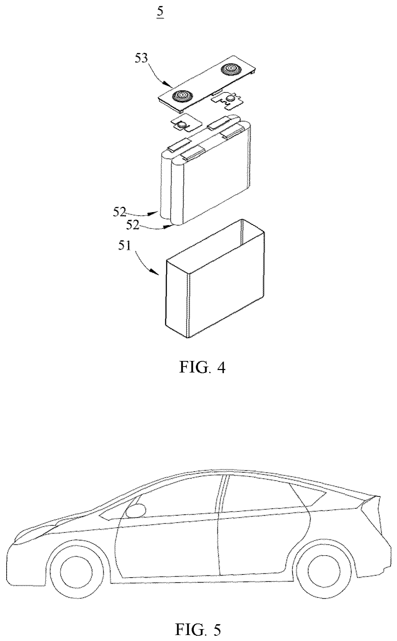

In some embodiments, as shown in FIG. 4, the outer packaging may include a housing 51 and a cover plate 53. The housing 51 may include a bottom plate and a side plate connected to the bottom plate, and the bottom plate and the side plate define, in an enclosing manner, an accommodating cavity. The housing 51 is provided with an opening communicating with the accommodating cavity, and the cover plate 53 is configured for lidding the opening to close the accommodating cavity. The electrode assembly 52 according to the first aspect of the embodiments of the present application or the electrode assembly 52 prepared by the method according to the second aspect of the embodiments of the present application is packaged in the accommodating cavity. The electrolytic solution is infiltrated into the electrode assembly 52. The number of electrode assemblies 52 included in the secondary battery 5 may be one or more and may be adjusted as needed.

### Method for Preparing Secondary Battery

In a second aspect, the embodiments of the present application provide a method for preparing the secondary battery according to the first aspect. The method includes preparing the positive electrode plate:
preparation of a positive electrode slurry: adding a mixture including the positive electrode active material and the chalcogen-containing material into a solvent to form a slurry; and
applying the positive electrode slurry onto at least one surface of the positive electrode current collector to form the positive electrode film layer.

In the related art, the slurry contains a positive electrode active material having a certain degree of oxidizability. During the preparation of the positive electrode plate, particularly in the process of preparing the slurry used for forming the positive electrode plate, in addition to the positive electrode active material, various alkaline substances may remain in the slurry. Specifically, NaOH and Na₂CO₃ are found in the slurry prepared with the positive electrode active material containing sodium ions, and such slurry exhibits alkalinity; LiOH and Li₂CO₃ are found in the slurry prepared with the positive electrode active material containing lithium ions. Without intending to be bound by any theory or explanation, such residual alkali present in the slurry would lead to more severe gelation if left untreated. Such a gelation phenomenon causes particle agglomeration, such that the positive electrode active material cannot be uniformly stirred and the slurry in a gel state cannot be properly applied, resulting in a positive electrode plate with poor quality.

The chalcogen-containing material is understood as: a chalcogen-containing material capable of reacting with alkalis and having a reducibility.

**In** one aspect, the presence of the chalcogen-containing material can reduce the content of residual alkali, such as Na₂O and/or Na₂CO₃, remaining in the positive electrode film layer during the preparation process. This prevents the corrosion of the positive electrode plate including the positive electrode film layer caused by the residual alkali, as well as the formation of electrolyte residues or other adverse electrochemical reactions, which could otherwise degrade the conductivity of the positive electrode plate. Consequently, it avoids the generation of electrolyte residues from the residual alkali in the secondary battery during electrochemical cycling, as well as other undesirable electrochemical reactions in the secondary battery. On the basis of the improved conductivity of the positive electrode plate, the dynamics performance of the secondary battery including the positive electrode plate is enhanced.

In another aspect, when the secondary battery undergoes the charge-discharge cycle, the initial coulombic efficiency of the secondary battery can be ensured, and the positive electrode film layer of the chalcogen-containing material can form a coating layer in situ on the surface of the positive electrode active material. This coating layer is equivalent to a protective film that can reduce the contact interface between the electrolytic solution and the positive electrode active material, facilitate the enhancement of the stability of the contact interface between the positive electrode active material and the electrolytic solution, and reduce side reactions, thereby improving the cycle performance and the high-temperature storage performance of the battery.

According to the embodiments of the present application, the chalcogen includes at least one of sulfur, selenium, and tellurium. As an example, the chalcogen-containing material includes an elemental chalcogen. The elemental chalcogen can react with at least part of the residual alkali to form an intermediate product during the mixing and stirring process of slurry composition preparation, such that the pH value of the slurry can be effectively reduced, and the gelation phenomenon of the slurry is alleviated or avoided. In addition, this intermediate product can further react with the residual alkali in the slurry during the subsequent process, which can further avoid the occurrence of gelation. This contributes to uniform stirring and proper coating of the slurry, thereby facilitating the preparation of the positive electrode plate from the composition containing the positive electrode active material and the elemental chalcogen, and improving the overall performance of the positive electrode plate, including its uniformity.

The positive electrode film layer is generally formed by coating the positive electrode current collector with the positive electrode slurry, drying, and cold pressing. The positive electrode slurry is generally formed by dispersing the positive electrode active material, an optional conductive agent, an optional binder, and any other components in a solvent and stirring the mixture uniformly. The solvent may be N-methylpyrrolidone (NMP) but is not limited thereto.

In some optional embodiments, the mixture includes 0.01% to 5% of elemental chalcogen based on the total mass of the mixture.

Optionally, the mixture used for the positive electrode plate includes elemental chalcogen in a mass content of any one of 0.01%, 0.05%, 0.1%, 0.15%, 0.20%, 0.25%, 0.30%, 0.35%, 0.40%, 0.45%, 0.5%, 0.55%, 0.60%, 0.65%, 0.70%, 0.75%, 0.80%, 0.85%, 0.90%, 0.95%, 0.10%, 0.15%, 0.20%, 0.25%, 0.30%, 0.35%, 0.40%, 0.45%, 0.50%, 0.6%, 0.7%, 0.8%, 0.9%, 1.0%, 1.5%, 2.0%, 2.5%, 3.0%, 3.5%, 4.0%, 4.5%, or 5.0%, or a range formed by any combination thereof.

According to the embodiments of the present application, according to the embodiments of the present application, the mixture may be understood as the solvent-free portion of the slurry used for the positive electrode plate. The chalcogen includes at least one of sulfur, selenium, and tellurium. The elemental chalcogen can react with at least part of the residual alkali to form an intermediate product during the mixing and stirring process of slurry composition preparation, such that the pH value of the slurry can be effectively reduced, and the gelation phenomenon of the slurry is alleviated or avoided. In addition, this intermediate product can further react with the residual alkali in the slurry during the subsequent process, which can further avoid the occurrence of gelation. This contributes to uniform stirring and proper coating of the slurry, thereby facilitating the preparation of the positive electrode plate from the composition containing the positive electrode active material and the elemental chalcogen, and improving the overall performance of the positive electrode plate, including its uniformity.

In some optional embodiments, the mixture includes elemental chalcogen in a mass content of 0.1% to 2%.

According to the embodiments of the present application, the mixture includes the elemental chalcogen, with the aforementioned mass content, which is beneficial for maintaining the uniformity of the slurry, preventing the aggregation in the slurry, and forming the positive electrode plate through slurry coating; the positive electrode plate including the mixture can facilitate the interface stability between the positive electrode plate and the electrolytic solution in the charging and discharging process of the secondary battery, thereby reducing side reactions and improving the cycle performance and the high-temperature storage performance of the secondary battery including the positive electrode plate.

According to the embodiments of the present application, if the amount of the elemental chalcogen added to the mixture is too high, the unreacted elemental chalcogen remaining in the positive electrode plate is not conducive to the impedance and the dynamics performance of the secondary battery during the charge-discharge cycle of the secondary battery including the mixture, and excessive unreacted elemental chalcogen impairs the capacity performance of the active material and the cycling stability; if the amount of the elemental chalcogen added to the mixture is too low, the residual alkali in the slurry is not fully reacted, and the remaining residual alkali deteriorates the impedance, increases the polarization, and reduces the capacity of the secondary battery.

In some embodiments, the mixture may include a binder and/or a conductive agent. In some optional embodiments, the volume-based average particle size Dv50 of the chalcogen-containing material is 50 nm to 1000 nm, optionally 100 nm to 500 nm.

According to the embodiments of the present application, when the volume-based average particle size Dv50 of the chalcogen-containing material falls within in the above range, it facilitates the dispersion of the elemental chalcogen in the slurry and promotes the reaction between the elemental chalcogen and the residual alkali, thereby preventing the slurry from gelation.

In addition, when the volume-based average particle size of the chalcogen-containing material in the positive electrode plate falls within the above range, it facilitates the formation of a uniform and appropriate coating layer on the positive electrode active material during the formation and subsequent cycling of the secondary battery including the positive electrode plate, while protecting the structure of the positive electrode plate. This coating layer contributes to enhancing the interface stability between the positive electrode active material and the electrolytic solution in the subsequent cycling process, reducing side reactions, and improving the cycle performance and the high-temperature storage performance of the secondary battery including the positive electrode plate.

The volume-based average particle size Dᵥ50 has the meaning well known in the art and represents the particle size at which the cumulative volume distribution of the material reaches 50%. The Dᵥ50 value can be determined using instruments and methods known in the art. For example, this can be conveniently determined by a laser particle size analyzer, such as Mastersizer 2000E laser particle size analyzer from Malvern Instruments Ltd., UK, in accordance with the Particle Size Analysis - Laser Diffraction Methods (GB/T 19077-2016).

In some optional embodiments, the valence state of the chalcogen includes at least one of zero valent, positive bivalent, and positive hexavalent; optionally, the valence state of the chalcogen includes the zero valent and the positive bivalent.

As an example, the reaction between the elemental chalcogen and the positive electrode active material may be represented by formula (3):

4NaMO₂ + 2S → 4MO + Na₂S₂O₃ + Na₂O (3),

where M includes at least one of Ni, Co, and Mn.

According to the embodiments of the present application, when the chalcogen in the above valence states is present in the positive electrode plate, and the secondary battery including the positive electrode plate undergoes formation and/or subsequent cycling, it is beneficial for improving the overall electrochemical performance of the secondary battery including the positive electrode plate.

In some optional embodiments, the ratio of the sum n1 of the molar amounts of the zero valent and the positive bivalent chalcogens in the positive electrode film layer to the sum n0 of the molar amounts of the zero valent, the positive bivalent, and the positive hexavalent chalcogens in the positive electrode film layer is (0.5-1):1, optionally (0.8-1):1.

Optionally, the ratio of the sum n1 of the molar amounts of the zero valent and the positive bivalent chalcogens in the positive electrode film layer to the sum n0 of the molar amounts of the zero valent, the positive bivalent, and the positive hexavalent chalcogens in the positive electrode film layer may be any one of 0.5:1, 0.6:1, 0.7:1, 0.8:1, 0.9:1, or 1.0:1, or within a range formed by any combination thereof.

According to the embodiments of the present application, by controlling the sum of the molar amounts of the zero valent and the positive bivalent chalcogens in the positive electrode film layer and the total molar amount of the chalcogens in the positive electrode film layer, the amount of the protective film in the positive electrode film layer can be controlled. This not only can protect the positive electrode active material, but also can improve the overall performance of the secondary battery.

In some optional embodiments, the preparation of the positive electrode slurry includes: adding a mixture including the positive electrode active material, the chalcogen-containing material, and the sodium compensator into a solvent to form a slurry.

According to the embodiments of the present application, the chalcogen-containing material participates in the formation of the SEI film and consumes part of the active sodium. The composition includes the sodium compensator, which can supplement the active sodium and simultaneously increase the capacity of the battery, thereby further improving the cycle life (including capacity retention rate and rate capability), the dynamics performance, and the storage life of the battery.

In some optional embodiments, the mixture includes the sodium compensator in a mass content of 0.05% to 3% based on the total mass of the mixture, optionally 0.1% to 2%.

Optionally, the composition used for the positive electrode plate includes the sodium compensator in a content of any one of 0.05%, 0.1%, 0.15%, 0.20%, 0.25%, 0.30%, 0.35%, 0.40%, 0.45%, 0.5%, 0.55%, 0.60%, 0.65%, 0.70%, 0.75%, 0.80%, 0.85%, 0.90%, 0.95%, 0.10%, 0.15%, 0.20%, 0.25%, 0.30%, 0.35%, 0.40%, 0.45%, 0.50%, 0.6%, 0.7%, 0.8%, 0.9%, 1.0%, 1.5%, 2.0%, 2.5%, or 3.0%, or a range formed by any combination thereof.

According to the embodiments of the present application, in the secondary battery including the mixture, the mixture in the positive electrode plate includes the sodium compensator in the above mass fraction, which facilitates the replenishment of active sodium ions consumed in the secondary battery and contributes to enhanced electrochemical performance of the secondary battery.

In some optional embodiments, the volume-based average particle size Dv50 of the sodium compensator is 1 µm to 5 µm.

Optionally, the volume-based average particle size Dv50 of the sodium compensator is any one of 1 µm, 2 µm, 3 µm, 4 µm, or 5 µm, or within a range formed by any combination thereof.

According to the embodiments of the present application, when the volume-based average particle size Dv50 of the sodium compensator falls within the above range, it is beneficial for protecting the structural stability of the positive electrode plate, improving the porosity of the positive electrode plate, and enhancing the dynamics performance of the positive electrode plate.

In some optional embodiments, the mass ratio of the chalcogen-containing material to the sodium compensator is 1:(0.5-5), optionally 1:(0.5-3).

Optionally, the mass ratio of the chalcogen-containing material to the sodium compensator may be 1:0.5, 1:0.6, 1:0.7, 1:0.8, 1:0.9, 1:1.0, 1:1.1, 1:1.2, 1:1.3, 1:1.4, 1:1.5, 1:1.6, 1:1.7, 1:1.8, 1:1.9, 1:2.0, 1:2.1, 1:2.2, 1:2.3, 1:2.4, 1:2.5, 1:2.6, 1:2.7, 1:2.8, 1:2.9, 1:3.0, 1:3.1, 1:3.2, 1:3.3, 1:3.4, 1:3.5, 1:3.6, 1:3.7, 1:3.8, 1:3.9, 1:4.0, 1:4.1, 1:4.2, 1:4.3, 1:4.4, 1:4.5, 1:4.6, 1:4.7, 1:4.8, 1:4.9, or 1:5.0, or within a range formed by any combination thereof.

According to the embodiments of the present application, the chalcogen-containing material reacts with the residual alkali in the slurry to generate an intermediate product, and part of the unreacted elemental chalcogen and the intermediate product participate in the formation of the SEI film to consume a certain amount of active sodium. By controlling the mass ratio of the consumed active sodium to the sodium compensator within the above range, it is possible, in one aspect, to effectively utilize the elemental chalcogen and exert its function, and in another aspect, to supplement the content of the active sodium, thereby increasing the capacity of the battery and further improving the cycle life and the storage life of the battery.

When the mass ratio of the chalcogen-containing material to the sodium compensator falls within the above range, it can avoid the excessive content of the chalcogen-containing material in the positive electrode film layer, which could otherwise affect the capacity and the dynamics performance of the positive electrode plate including the positive electrode film layer during the charge-discharge cycles of the secondary battery. Meanwhile, it can avoid the excessive content of the sodium compensator in the positive electrode film layer, which could otherwise impact the performance, the stability, and the safety of the secondary battery.

In some optional embodiments, the ratio of the volume-based average particle size Dv50 of the chalcogen-containing material to the volume-based average particle size Dv50 of the sodium compensator is 1:(1-5), optionally 1:(1-2).

Optionally, the ratio of the volume-based average particle size Dv50 of the chalcogen-containing material to the volume-based average particle size Dv50 of the sodium compensator may be any one of 1:1, 1:1.1, 1:1.2, 1:1.3, 1:1.4, 1:1.5, 1:1.6, 1:1.7, 1:1.8, 1:1.9, 1:2.0, 1:2.1, 1:2.2, 1:2.3, 1:2.4, 1:2.5, 1:2.6, 1:2.7, 1:2.8, 1:2.9, 1:3.0, 1:3.1, 1:3.2, 1:3.3, 1:3.4, 1:3.5, 1:3.6, 1:3.7, 1:3.8, 1:3.9, 1:4.0, 1:4.1, 1:4.2, 1:4.3, 1:4.4, 1:4.5, 1:4.6, 1:4.7, 1:4.8, 1:4.9, or 1:5.0, or within a range formed by any combination thereof.

According to the embodiments of the present application, by controlling the ratio of the volume-based average particle size Dv50 of the chalcogen-containing material to the volume-based average particle size Dv50 of the sodium compensator, it is beneficial for improving the uniformity of the positive electrode plate containing the composition, and enhancing the cycle performance and the dynamics performance of the secondary battery including the positive electrode plate.

### [Preparation Method]

The method for preparing the battery according to the present application is well known. The method for preparing the secondary battery according to the present application is well known. The method includes at least the step of preparing the electrode assembly according to the second aspect of the embodiments of the present application. In some embodiments, the electrode assembly may be placed in an outer packaging, dried, and then injected with an electrolytic solution. After undergoing processes such as vacuum packaging, standing, formation, and shaping, a secondary battery is obtained.

In some embodiments, a positive electrode plate, a separator, a negative electrode plate, and an electrolytic solution may be assembled to form a secondary battery cell. As an example, the positive electrode plate, the separator, and the negative electrode plate may form an electrode assembly through a winding process and/or a stacking process. The electrode assembly is placed in an outer packaging, dried, and then injected with electrolytic solution. After undergoing processes such as packaging, standing, formation, and shaping, a battery cell is obtained. A plurality of battery cells may also be further connected in series, in parallel, or in series-parallel to form a battery module. A plurality of battery modules may also be connected in series, in parallel, or in series-parallel to form a battery pack. In some embodiments, the plurality of battery cells may also be directly assembled into a battery pack.

In some embodiments of the present application, the secondary battery according to the present application may be assembled into a battery module. The number of secondary batteries included in the battery module may be a plurality, and the specific number may be adjusted according to the application and capacity of the battery module.

Optionally, the battery module may further include a shell having an accommodating space in which the plurality of secondary batteries are accommodated.

In some embodiments, the above battery module may also be assembled into a battery pack; the number of the battery modules included in the battery pack may be adjusted based on the application and capacity of the battery pack.

### Electric Device

In a third aspect, the embodiments of the present application provide an electric device. The electric device includes the secondary battery according to the first aspect and the secondary battery prepared by the method according to the second aspect.

The electric device of the present application includes the secondary battery and thus has at least the same advantages as the secondary battery.

The secondary battery may be used as a power source for the electric device, or as an energy storage unit for the electric device. The electric device may be, but is not limited to, a mobile device (e.g., a mobile phone or a notebook computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

FIG. 5 is a schematic diagram of an electric device as one example. The electric device is a pure electric vehicle, a hybrid electric vehicle, a plug-in hybrid electric vehicle, or the like. To meet the requirements of the electric device for high power and high energy density, the battery pack or the battery module may be used.

As another example, the electric device may be a mobile phone, a tablet computer, a notebook computer, or the like. The electric device is generally required to be light and thin, and thus a secondary battery can be used as the power source.

### Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

### Example 1

### Preparation of positive electrode plate

O₃-type layered oxide NaFe_{2/3}Mn_{1/6}Co_{1/6}O₂, nano elemental sulfur, the conductive agent carbon black, the binder polyvinylidene difluoride (PVDF), and the carbon nanotube (CNT) were mixed at a weight ratio of 88.5:0.5:4.7:3.3:3.0 under a stirring speed of 400 r/s to 1000 r/s, followed by wetting, kneading and dispersion treatment. The mixing effect of the positive electrode slurry is shown in FIG. 1. Compared with the positive electrode slurry without nano elemental sulfur (FIG. 1b), the positive electrode slurry of this example (FIG. 1a) exhibited better fluidity and more stable viscosity (FIG. 2), and no gelation occurred.

The prepared slurry was applied to an aluminum foil, followed by drying, cold pressing, and cutting to obtain the positive electrode plate of Example 1.

### Preparation of negative electrode plate

The active material hard carbon, the conductive agent carbon black, the binder styrene-butadiene rubber (SBR), and the thickener sodium carboxymethylcellulose (CMC-Na) were dry-mixed uniformly at a weight ratio of 97.2:0.8:0.8:1.2, and then deionized water was added and mixed thoroughly to prepare a negative electrode slurry. The negative electrode slurry was then evenly applied to the negative electrode current collector aluminum foil, followed by drying, cold pressing, and cutting to obtain a negative electrode plate.

### Preparation of electrolytic solution

In an argon atmosphere glove box (H₂O < 0.01 ppm, O₂ < 0.01 ppm), the organic solvent ethylene carbonate (EC) and ethyl methyl carbonate (EMC) were uniformly mixed in a volume ratio of 4:6. Then, 12.5% of NaPF₆ sodium salt was added and dissolved in the organic solvent, followed by uniform stirring to obtain the electrolytic solution of Example 1.

### Preparation of separator

A polyethylene film was used as the separator.

### Preparation of sodium-ion secondary battery

The prepared positive electrode plate, separator, and negative electrode plate were stacked in sequence, with the separator positioned between the positive electrode plate and the negative electrode plate, and then wound to obtain a bare cell. The bare cell was placed in a battery outer packaging, followed by electrolytic solution injection, packaging, standing, formation, shaping, and capacity testing to complete the preparation of a lithium-ion battery. The lithium-ion battery had a thickness of 4.2 mm, a width of 32 mm, and a length of 82 mm.

Examples 2 to 9: The preparation method therein was similar to that in Example 1, except for adjustments to the content and type of elemental chalcogen in the composition or the positive electrode plate, as well as relevant parameters in the preparation steps. See Table 1 for details.

Examples 10 to 18: The preparation method therein was similar to that in Example 1, except that the sodium compensator was added into the composition or the positive electrode plate, and O3-type layered oxide NaFe_{2/3}Mn_{1/6}Co_{1/6}O₂, nano elemental sulfur, sodium sulfide, the conductive agent carbon black, the binder polyvinylidene difluoride (PVDF), and the carbon nanotube (CNT) were mixed at a weight ratio of 88:0.5:0.5:4.7:3.3:3.0 under a stirring speed of 400 r/s to 1000 r/s, followed by wetting, kneading and dispersion treatment. The mixing effect of the positive electrode slurry is shown in FIG. 1. Compared with the positive electrode slurry without nano elemental sulfur in Comparative Example 1 (FIG. 1(b)), the positive electrode slurry of this example (FIG. 1(a)) exhibited better fluidity and more stable viscosity (FIG. 2), and no gelation occurred.

The prepared slurry was then applied to the aluminum foil, followed by drying, cold pressing, and cutting to obtain the positive electrode plate of Example 1. See Table 1 for details. The content of the sodium compensator in the positive electrode active layer is detailed in Table 1.

### Examples 19 to 20:

The preparation method therein was similar to that of Example 10, except that the type of the sodium compensator is different. See Table 1 for details.

### Examples 21 to 23:

The preparation method therein was similar to that of Example 10, except that the ratio of the volume-based average particle size Dv50 of the elemental chalcogen to that of the sodium compensator was different. See Table 1 for details.

### Comparative Example 1

This comparative example differs from Example 1 in terms of the preparation of the positive electrode plate:
The layered oxide NaFe_{2/3}Mn_{1/6}Co_{1/6}O₂, the conductive agent carbon black, the binder polyvinylidene difluoride (PVDF), and the carbon nanotube (CNT) were stirred and mixed thoroughly at a weight ratio of 89:4.7:3.3:3 to obtain a positive electrode slurry. Then, the positive electrode slurry was evenly applied to the positive electrode current collector, followed by drying, cold pressing, and cutting to obtain the positive electrode plate of the comparative example.

### Test Section

### 1) Test method for the content of chalcogen in the positive electrode film layer:

The positive electrode plate was first digested using aqua regia, a digestion reagent prepared by mixing concentrated nitric acid (HNO₃) and concentrated hydrochloric acid (HCl) at a volume ratio of 1:1. The digestion was performed by hot plate digestion, acid digestion, or microwave digestion (at about 200 °C under high temperature and high pressure). Then the digested solution was collected and placed into an inductively coupled plasma optical emission spectrometer for testing, so as to quantitatively measure the content of the chalcogen.

2) Test method for capacity retention rate at 0.33C: At 25 °C, the sodium-ion battery was charged to 4.25 V at a constant current of 0.33C, charged at a constant voltage of 4.25 V until the current reached 0.05C, and then discharged to 3.0 V at a constant current of 0.33C. This process constituted one charge-discharge cycle. The charge-discharge cycle was repeated to calculate the capacity retention rate of the sodium-ion battery after 100 cycles.

3) Capacity retention rate (%) of the sodium-ion battery after 100 cycles at 25 °C = (discharge capacity in the 100th cycle/discharge capacity in the first cycle) × 100%.

### 4) Test method for storage capacity retention rate at 60 °C:

Recovery rate test process for battery capacity: Prior to storage, the battery of Example 1 was charged to 4.25 V at a constant current of 1/3C at 25 °C, then charged at a constant voltage of 4.25 V until the current reached 0.05C. After standing for 30 min, the battery was discharged to 2.8 V at 1/3C. The obtained capacity was recorded as the initial capacity C0. After storing for 100 days at 60 °C, the battery was cooled to room temperature. The above steps were repeated. The measured capacity was recorded as Cr, and the capacity recovery rate of the battery after 50 days of storage was calculated as: H = Cr/C0 × 100%.

### 5) Test method for initial coulombic efficiency:

The electrolyte-injected cell was charged to 3.9 V at a current of 0.1C on a formation machine, with the formation capacity recorded as C1. The formed cell was then placed on a Land charge-discharge machine, and charged to 4.25 V at a current of 0.33C, with the charge capacity recorded as C2. Finally, the cell was discharged to 2.8 V at a current of 0.33C, with the discharge capacity recorded as D1. The initial coulombic efficiency of the cell was calculated as: D1/(C1 + C2) × 100%.

### 6) Fast charging performance (fast charging time from 10% to 80% SOC )

Test process for charging time from 10% to 80% SOC: At 25 °C, the batteries of the examples and the comparative examples were charged stepwise from 10% SOC to 80% SOC at 1.0C/0.8C/0.5C/0.33C. The charging duration before lithium plating occurs on the negative electrode was defined as the fast charging time of the battery. Shorter fast charging time indicates better fast-charging performance of the battery.

### 7) Test method for molar ratio of chalcogen in different valence states:

The secondary battery after the charge-discharge cycle was disassembled to obtain the positive electrode plate, from which a 1×1 cm sample was cut. After thorough drying, the prepared sample was placed into an X-ray photoelectron spectrometer for testing. The data showing the energy spectrum peak positions and intensities of the chalcogens in different valence states was collected and analyzed. The ratio of peak areas corresponding to different valence states was used as the content ratio of the respective valence states.

It can be seen from the test results in Table 1 that when the elemental chalcogen falls within the above range, the elemental chalcogen can react with the residual alkali in the slurry, thereby preventing gelation of the slurry. The positive electrode plate contains a reducing intermediate product containing chalcogen, which continues to react with the residual alkali in the positive electrode plate. This reaction reduces the residual alkali content in the positive electrode active material and simultaneously forms an artificial protective film. This protective film, composed of components such as Na₂SO₄, exhibits excellent electrochemical stability, and may be positioned on the surface of the positive electrode active material or exist independently. The presence of this protective film contributes to enhancing the stability of the positive electrode active material contacting with the electrolytic solution in the subsequent cycling process, reducing side reactions, and improving the cycle performance and the high-temperature storage performance of the secondary battery including the positive electrode plate. In addition, the reaction between the intermediate product and the residual alkali releases additional active ions, including Na⁺ ions, which can compensate for the active ion loss caused by SEI formation. As a result, the content of active ions in the secondary battery is increased, which is conducive to improving the energy density, the energy storage capacity, the power performance, and the cycle life of the secondary battery.

As can be seen from Table 1, Examples 1 to 9 differ from Comparative Example 1 in that the elemental chalcogen was added into the composition, and a protective film was generated on the positive electrode plate during the formation of the secondary battery, which increases the stability of the positive electrode active material, and is beneficial for improving the capacity retention rate and the high-temperature storage performance of the secondary battery. In addition, the charge-discharge performance of the secondary battery is improved.

As can be seen from Table 1, Examples 10 to 20 differ from Comparative Example 1 in that the composition contains the elemental chalcogen and the sodium compensator, and a protective film is generated on the positive electrode plate during the formation of the secondary battery, which enhances the stability of the positive electrode active material, and is beneficial for improving the capacity retention rate and the high-temperature storage performance of the secondary battery. The presence of the sodium compensator supplements the active sodium ions consumed during the generation of the SEI film by the elemental chalcogen, thereby improving the initial coulombic efficiency and enhancing the charge-discharge performance of the secondary battery.

As can be seen from Table 1, Examples 21 to 23 differ from Example 10 in that the ratio of the average particle size Dv50 of the elemental chalcogen to the average particle size Dv50 of the sodium compensator is different, which has a certain impact on the charge-discharge performance of the secondary battery as well as the capacity retention rate and the high-temperature storage performance of the secondary battery.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Table 1**

| Item | Mixtures in the preparation method | | | | | Positive electrode plate | | | Secondary battery | | | | | | | |
|---|---|---|---|---|---|---|---|---|---|---|---|---|---|---|---|---|
| | Type of elemental chalcogen | Mass percentage of elemental chalcogen in the composition | Type of sodium compensator | Content of sodium compensator | Mass ratio of elemental chalcogen to sodium compensator in the composition | Type of chalcogen | Mass percentage of chalcogen in the positive electrode plate | Ratio of the average particle size Dv50 of elemental chalcogen to the average particle size Dv50 of sodium compensator | Mass percentage of Na₂O in the positive electrode film layer after 100 charge/ discharge cycles, ppm | Mass percentage of Na₂CO₃ in the positive electrode film layer after 100 charge/ discharge cycles, ppm | Type of chalcogen-containing salt after 100 charge/ discharge cycles | Mass percentage of chalcogen in the positive electrode film layer after 100 charge/discharge cycles | Initial coulombic efficiency (%) | Capacity retention rate at 0.33C (100 cycles) | Capacity retention rate after 50 days of storage | Charging performance - charging time from 10% to 80% SOC |
| Comparative Example 1 | / | / | / | / | / | / | / | / | 2000 | 4000 | / | / | 870% | 900% | 93.0% | 40min |
| Example 1 | Elemental sulfur | 0.50% | / | / | | Sulfur | 0.5% | / | 800 | 1000 | Na₂S₂O₃, Na₂SO₄ | 0.3% | 86.5% | 93.1% | 95.1% | 30min |
| Example 2 | Elemental sulfur | 0.01% | / | / | / | Sulfur | 0.0% | | 1000 | 2000 | Na₂S₂O₃, Na₂SO₄ | 0.005% | 86.9% | 91.0% | 93.5% | 37min |
| Example 3 | Elemental sulfur | 5% | / | / | / | Sulfur | 5.0% | / | 200 | 300 | Na₂S₂O₃, Na₂SO₄ | 3% | 85.1% | 92.8% | 940% | 35min |
| Example 4 | Elemental sulfur | 1% | / | / | / | Sulfur | 1.0% | / | 500 | 800 | Na₂S₂O₃, Na₂SO₄ | 0.6% | 86.1% | 93.1% | 94.7% | 33min |
| Example 5 | Elemental sulfur | 1.5% | / | / | / | Sulfur | 1.5% | / | 400 | 700 | Na₂S₂O₃, Na₂SO₄ | 1% | 85.8% | 930% | 94.5% | 35min |
| Example 6 | Elemental sulfur | 2.0% | / | / | / | Sulfur | 20% | / | 300 | 500 | Na₂S₂O₃, Na₂SO₄ | 1.2% | 85.6% | 92.9% | 94.3% | 36min |
| Example 7 | Elemental selenium | 0.5 % | / | | / | Selenium | 0.5% | / | 800 | 1000 | Na₂Se₂O₃, Na₂SeO₄ | 0.3% | 86.5% | 93.1% | 95.1% | 30min |
| Example 8 | Elemental selenium | 2.0% | / | / | / | Selenium | 2.0% | / | 300 | 500 | Na₂Se₂O₃, Na₂SeO₄ | 1.2% | 86.1% | 92.9% | 94.3% | 36min |
| Example 9 | Elemental tellurium | 0.5% | / | / | / | Tellurium | 0.5% | / | 800 | 1000 | Na₂Te₂O₃, Na₂TeO₄ | 0.3% | 86.5% | 93.1% | 95.1% | 30min |
| Example 10 | Elemental sulfur | 0.5% | Sodium sulfide | 0.5% | 1:1 | Sulfur | 0.5% | 1:5 | 800 | 1000 | Na₂S₂O₃, Na₂SO₄ | 0.3% | 88.0% | 93.5% | 95.5% | 30min |
| Example 11 | Elemental sulfur | 0.5% | Sodium sulfide | 0.05% | 10:1 | Sulfur | 0.5% | 1:5 | 800 | 1000 | Na₂S₂O₃, Na₂SO₄ | 0.3% | 87.3% | 93.2% | 95.2% | 30min |
| Example 12 | Elemental sulfur | 0.5% | Sodium sulfide | 2.5% | 1:5 | Sulfur | 0.5% | 1:5 | 800 | 1000 | Na₂S₂O₃, Na₂SO₄ | 0.3% | 88.3% | 93.9% | 95.9% | 30min |
| Example 13 | Elemental sulfur | 0.5% | Sodium sulfide | 1.50% | 1:3 | Sulfur | 0.5% | 1:5 | 800 | 1000 | Na₂S₂O₃, Na₂SO₄ | 0.3% | 88.1% | 93.6% | 95.6% | 30min |
| Example 14 | Elemental sulfur | 0.5% | Sodium sulfide | 2.00% | 1:4 | Sulfur | 0.5% | 1:5 | 800 | 1000 | Na₂S₂O₃, Na₂SO₄ | 0.3% | 88.2% | 93.7% | 95.7% | 30min |
| Example 15 | Elemental sulfur | 0.5% | Sodium sulfide | 2.50% | 1:5 | Sulfur | 0.5% | 1:5 | 800 | 1000 | Na₂S₂O₃, Na₂SO₄ | 0.3% | 88.3% | 93.8% | 95.8% | 30min |
| Example 16 | Elemental sulfur | 0.5% | Sodium sulfide | 0.10% | 5:1 | Sulfur | 0.5% | 1:5 | 800 | 1000 | Na₂S₂O₃, Na₂SO₄ | 0.3% | 87.5% | 93.2% | 95.2% | 30min |
| Example 17 | Elemental sulfur | 0.5% | Sodium sulfide | 0.13% | 4:1 | Sulfur | 0.5% | 1:5 | 800 | 1000 | Na₂S₂O₃, Na₂SO₄ | 0.3% | 87.6% | 93.3% | 95.3% | 30min |
| Example 18 | Elemental sulfur | 0.5% | Sodium sulfide | 0.25% | 2:1 | Sulfur | 0.5% | 1:5 | 800 | 1000 | Na₂S₂O₃, Na₂SO₄ | 0.3% | 87.7% | 93.4% | 95.4% | 30min |
| Example 19 | Elemental sulfur | 0.5% | Sodium selenide | 0.5% | 1:1 | Sulfur | 0.5% | 1:5 | 800 | 1000 | Na₂S₂O₃, Na₂SO₄ | 0.3% | 880% | 93.6% | 95.6% | 30min |
| Example 20 | Elemental sulfur | 0.5% | Sodium nitride | 0.5% | 1:1 | Sulfur | 0.5% | 1:5 | 800 | 1000 | Na₂S₂O₃, Na₂SO₄ | 0.3% | 88.0% | 93.6% | 95.6% | 30min |
| Example 21 | Elemental sulfur | 0.5% | Sodium sulfide | 0.5% | 1:1 | Sulfur | 0.5% | 1:1 | 800 | 1000 | Na₂S₂O₃, Na₂SO₄ | 0.3% | 88.0% | 93.4% | 95.4% | 33min |
| Example 22 | Elemental sulfur | 0.5% | Sodium sulfide | 0.5% | 1:1 | Sulfur | 0.5% | 1:2 | 800 | 1000 | Na₂S₂O₃, Na₂SO₄ | 0.3% | 880% | 93.5% | 95.5% | 32min |
| Example 23 | Elemental sulfur | 0.5% | Sodium sulfide | 0.5% | 1:1 | Sulfur | 0.5% | 1:4 | 2000 | 4000 | Na₂S₂O₃, Na₂SO₄ | 0.3% | 88.0% | 93.6% | 95.6% | 31min |

## Claims

1. A secondary battery, comprising a positive electrode plate, wherein the positive electrode plate comprises a positive electrode current collector and a positive electrode film layer disposed on at least one surface of the positive electrode current collector, the positive electrode film layer comprising a positive electrode active material and a chalcogen-containing material.

2. The secondary battery according to claim 1, wherein a mass proportion of the chalcogen is less than or equal to 3% based on a total mass of the positive electrode film layer, optionally 0.1% to 2%.

3. The positive electrode plate according to claim 1 or 2, wherein the chalcogen comprises at least one of sulfur, selenium, or tellurium.

4. The secondary battery according to any one of claims 1 to 3, wherein the chalcogen-containing material comprises a chalcogen-containing elementary substance and/or a chalcogen-containing salt.

5. The secondary battery according to claim 4, wherein the chalcogen-containing salt comprises A₂O₃²⁻ or AO₄²⁻, wherein A represents the chalcogen.

6. The secondary battery according to any one of claims 1 to 5, wherein a valence state of the chalcogen comprises at least one of zero valent, positive bivalent, positive tetravalent, and positive hexavalent; optionally, the valence state of the chalcogen comprises the positive hexavalent and the positive tetravalent.

7. The secondary battery according to claim 6, wherein a ratio of a molar amount n2 of the positive hexavalent chalcogen in the positive electrode film layer to a sum n0 of molar amounts of the zero valent, the positive tetravalent, and the positive hexavalent chalcogens in the positive electrode film layer is (0.5-1):1, optionally (0.7-1):1.

8. The secondary battery according to any one of claims 1 to 7, wherein the positive electrode active material comprises a layered transition metal oxide;
optionally, the layered transition metal oxide comprises a transition metal oxide having a structural formula of AₐNi_{b}Co_{c}Mn_{f}M_{d}Oₑ, wherein 0.5 ≤ a ≤ 1.2, 0 ≤ b ≤ 2, 0 ≤ c ≤ 2, 0 ≤ f ≤ 1, 0 ≤ d ≤ 1.5, 1 ≤ e ≤ 4, and A comprises one or more of Li and Na; M comprises one or more of Ca, Al, Zr, Zn, Cu, Cr, Mg, Fe, V, Ti, and B; optionally, b + c + d + f = 1, or b + c + d + f = 2.

9. The secondary battery according to claim 1 or 8, wherein the positive electrode active material comprises a coating layer at least partially coating the positive electrode active material; optionally, the coating layer comprises MO_{z}, wherein M comprises one or more of Ni, Co, Mn, Fe, and Cu, and 0 < z < 2.

10. The secondary battery according to claim 9, wherein the coating layer has a thickness of 1 nm to 10 nm.

11. The secondary battery according to any one of claims 1 to 10, wherein the positive electrode film layer comprises sodium oxide; optionally, a mass content of the sodium oxide in the positive electrode film layer is less than or equal to 1000 ppm; and/or
the positive electrode film layer comprises sodium carbonate, and a mass content of the sodium carbonate in the positive electrode film layer is less than or equal to 2000 ppm.

12. The secondary battery according to claims 1 to 11, wherein the secondary battery is a sodium-ion secondary battery.

13. The secondary battery according to any one of claims 1 to 12, wherein the positive electrode film layer comprises a sodium compensator.

14. The secondary battery according to claims 1 to 13, wherein the sodium compensator comprises one or more of sodium sulfide, sodium selenide, and sodium nitride.

15. A method for preparing the secondary battery according to claims 1 to 14, comprising preparing the positive electrode plate:
preparation of a positive electrode slurry: adding a mixture comprising the positive electrode active material and the chalcogen-containing material into a solvent to form a slurry; and
applying the positive electrode slurry onto at least one surface of the positive electrode current collector to form the positive electrode film layer.

16. The method according to claim 15, wherein the mixture comprises 0.01% to 5% of elemental chalcogen based on a total mass of the mixture; and/or
a volume-based average particle size Dv50 of the chalcogen-containing material is 50 nm to 1000 nm, optionally 100 nm to 500 nm.

17. The method according to claim 15 or 16, wherein the valence state of the chalcogen comprises at least one of zero valent, positive bivalent, and positive hexavalent; optionally, the valence state of the chalcogen comprises the zero valent and the positive bivalent;
optionally, a ratio of a sum n1 of molar amounts of the zero valent and the positive bivalent chalcogens in the positive electrode film layer to a sum n0 of molar amounts of the zero valent, the positive bivalent, and the positive hexavalent chalcogens in the positive electrode film layer is (0.5-1):1, optionally (0.8-1):1.

18. The method according to any one of claims 15 to 17, wherein the preparation of the positive electrode slurry comprises: adding a mixture comprising the positive electrode active material, the chalcogen-containing material, and the sodium compensator into a solvent to form a slurry;
optionally, a volume-based average particle size Dv50 of the sodium compensator is 1 µm to 5 µm;
optionally, a mass proportion of the sodium compensator is less than or equal to 3% based on the total mass of the mixture, optionally 0.1% to 2%.

19. The method according to claim 18, wherein a mass ratio of the chalcogen-containing material to the sodium compensator is 1:(0.5-5), optionally 1:(0.5-3); and/or
a ratio of the volume-based average particle size Dv50 of the chalcogen-containing material to the volume-based average particle size Dv50 of the sodium compensator is 1:(1-5), optionally 1:(1-2).

20. An electric device, comprising the secondary battery according to any one of claims 1 to 14 and the secondary battery prepared by the method according to any one of claims 15 to 19.
